# EUROPEAN PATENT SPECIFICATION

(11) **EP 1 767 778 B1**
(45) Date of publication and mention of the grant of the patent: **14.10.2009**
(21) Application number: 05425668.0
(22) Date of filing: 26.09.2005
(51) Int. Cl.: F03B 13/00, F04F 1/06, F04F 1/16

(54) **Liquid-piston engine and system for generating electric current**
Brennkraftmaschine mit Flüssigkeitskolben und elektrisches Stromerzeugungssystem
Moteur à piston liquide et système de production de courant électrique

(43) Date of publication of application: 28.03.2007
(73) Proprietor: IN.SER. S.p.A., 10146 Torino (IT)
(72) Inventor: Faussone, Elio, 10146 Torino (IT)
(74) Representative: Garavelli, Paolo

(56) References cited:
- DE-C- 286 012
- GB-A- 1 105 770
- US-A- 6 073 445

## Description

The present invention refers to a liquid-piston engine; moreover, the present invention refers to a system for generating electric current comprising a liquid-piston engine.

Different arrangements are known in the art dealing with embodiments of liquid-piston engines, such as those, for example, disclosed in patents US 6,739,131, US 6,073,445, US 6,182,615, US 5,713,202 or US 4,201,049: the operating principle of such engines substantially provides that in the upper portion of at least one combustion chamber containing fluid, generally a liquid such as water, in a lower portion thereof, the expansion of a fuel, generally a fossil gas, is provoked, through combustion; the explosive combustion force thereby exerts a pressure impulse on the liquid surface which is pushed, as if it were a liquid piston, along a distribution duct towards a user, generally a Pelton turbine which, as known, is actuated by a jet of fluid operating on the median edge of its blades shaped as a double spoon, which divides and deflects it by almost 180°, taking it to give in this way practically all its kinetic energy to the turbine runner itself.

Known liquid-piston engines however have the inconvenience that the various alternate phases of the combustion cycles, in particular the alternate, and above all the irregular burst phases, only generate a periodic and intermittent advancement movement of the liquid piston inside its own distribution duct, generating a consequent intermittent supply of the Pelton turbine where, on the contrary, due to obvious operating efficiency and regularity reasons, a continuous supply would be desirable in order to guarantee a certain homogeneity and regularity of electric energy production.

Therefore, object of the present invention is providing a liquid-piston engine which allows obtaining a liquid delivery to one or more users, such as for example at least one Pelton turbine, such delivery being more regular with respect to known engines.

Another object of the present invention is providing a system for generating electric current comprising a liquid-piston engine which, due to its operating regularity and continuity, guarantees a more efficient and regular energy production with respect to what is proposed by the prior art.

The above and other objects and advantages of the invention, as will appear from the following description, are obtained with a liquid-piston engine as disclosed in claim 1.

Moreover, the above and other objects and advantages of the invention are obtained with a system for generating electric current comprising a liquid-piston engine as disclosed in claim 10. Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1 shows a top sectional view of an embodiment of the liquid-piston engine according to the present invention;
- FIG. 2a to 2g show a sequence of operating steps of the liquid-piston engine of FIG. 1;
- FIG. 3a shows a top sectional view of another embodiment of the liquid-piston engine according to the present invention;
- FIG. 3b shows a detailed view of a part of the liquid-piston engine of FIG. 3a;
- FIG. 4a shows a preferred embodiment of a system for generating electric current comprising the liquid-piston engine of FIG. 1 in one of its operating steps; and
- FIG. 4b shows the system for generating electric current of FIG. 4a in another of its operating steps.

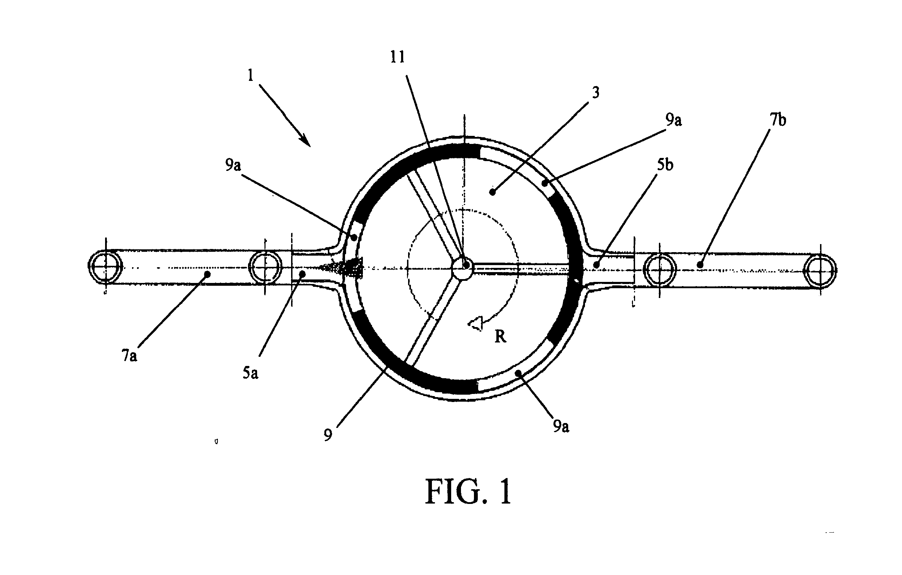

With reference to FIG. 1, it is possible to note that a preferred embodiment of the liquid-piston engine 1 according to the present invention comprises a combustion chamber 3 with a substantially circular plan equipped on its external perimeter with at least two discharge openings 5 (FIG. 1 shows as an example two discharge openings, respectively designated as 5a and 5b) respectively communicating with at least one distribution duct 7 (FIG. 1 shows as an example a first and a second distribution ducts 7a, 7b) containing a fluid, preferably a liquid such as water, operating as liquid piston. Inside the combustion chamber 3, a rotating valve 9 is arranged, such valve being rotatingly driven by at least one rotating shaft 11 driven by at least one actuating engine (not shown) which is preferably of the electric type.

Obviously, the engine 1 is further equipped, in a substantially known way, with a system for supplying a fuel substance or mixture, such as, for example, a fossil gas generated by a biomass like wood, inside the combustion chamber 3, such system comprising at least one supply duct 13 adapted to insert the fuel inside the combustion chamber 3 and a system for igniting such fuel.

The rotating valve 9 is preferably made as a circular crown radially equipped with at least three openings 9a arranged at 120° one from the other and adapted to allow the periodic communication, during its rotation cycle, between at least one discharge opening 5, 5a, 5b of the combustion chamber 3 and the combustion chamber 3 interior. The rotation speed of the rotating valve 9 must obviously be adjusted so that in every fuel ignition step of a combustion cycle, at least one opening 5, 5a, 5b of the combustion chamber 3 is open. In particular, it can be provided that the rotation speed of the rotating valve 3 is managed in coordination with the supply system so that the openings 5, 5a, 5b of the combustion chamber 3 are cyclically and alternatively open, allowing to cyclically and alternately compress the fluid inside the distribution ducts 7, 7a, 7b.

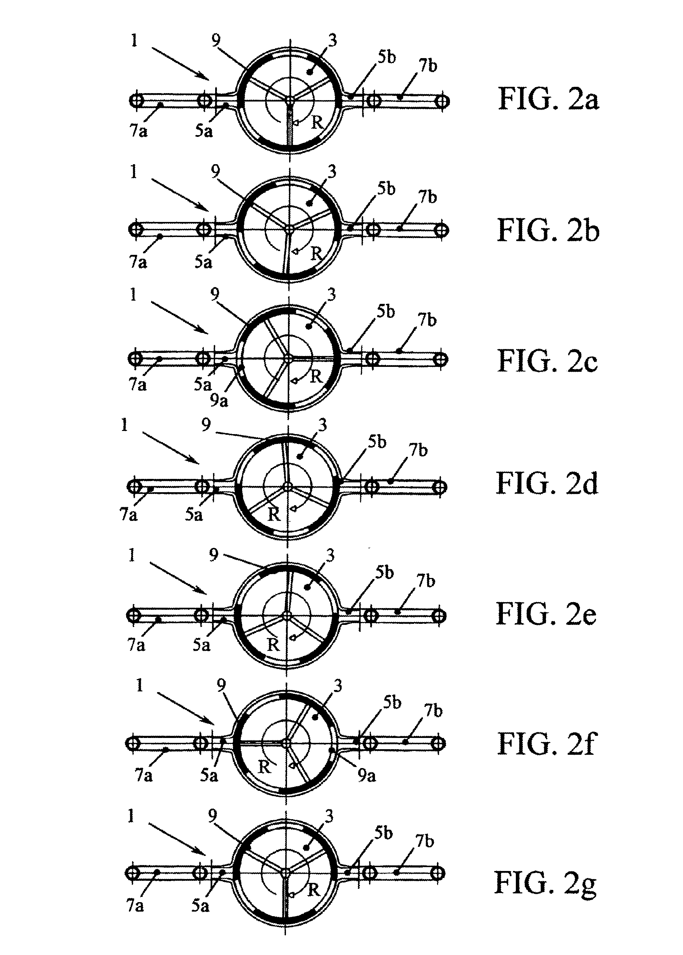

With reference now to FIG. 2a to 2g, it is possible to note an example of a sequence of the operating steps of the liquid-piston engine 1 as shown in FIG. 1 and described above; in particular:
- FIG. 2a shows a step in which the rotating valve 9 closes both discharge openings 5a, 5b of the combustion chamber 3;
- as shown in FIG. 2b, by proceeding according to the example of rotation direction designated by arrow R, the rotating valve 9 starts opening the discharge opening 5a communicating with the first distribution duct 7a; under such situation, it is possible to preferably provide a fuel entry step inside the combustion chamber 3 by the supply system;
- FIG. 2c shows a first combustion step in which the rotating valve 9, through one of its openings 9a, leaves opening 5a open and the fuel is ignited by the ignition system; in this step, the pressure impulse generated by fuel explosion is transmitted to the fluid contained in the first distribution duct 7a which is then pushed downstream of the combustion chamber 3 along the first distribution duct 7a;
- FIG. 2d shows a step in which the rotating valve 9 again closes both discharge openings 5a, 5b of the combustion chamber 3;
- FIG. 2e shows that the rotating valve 9, going on rotating, starts opening the discharge opening 5b communicating with the second distribution duct 7b; in such situation, it is again preferable to provide for a fuel entry step inside the combustion chamber 3 by the supply system;
- FIG. 2f shows a second combustion step in which the rotating valve 9, through one of its openings 9a, leaves opening 5b open and fuel is ignited by the ignition system; in this step the pressure impulse generated by fuel explosion is transmitted to fluid contained in the second distribution duct 7b that is then pushed downstream of the combustion chamber 3 along the second distribution duct 7b itself;
- FIG. 2g shows a step in which the rotating valve 9 goes back closing both discharge openings 5a, 5b of the combustion chamber 3 and engine 1 according to the present invention goes back to the step shown in FIG. 2a for repeating the above-described operating cycle.

The engine 1 has been previously described in its components and its operating steps referring to an exemplifying embodiment thereof in which the combustion chamber openings and their related distribution ducts are only two. In view of what has been taught above, however, it is wholly clear that a skilled person in the art is absolutely able to realise an engine 1 according to the present invention with a varying number of discharge openings and distribution ducts, even placed differently inside the combustion chamber 3, thereby characterised by an operating cycle which is more or less different from the above described one, without departing from the scope of the present invention.

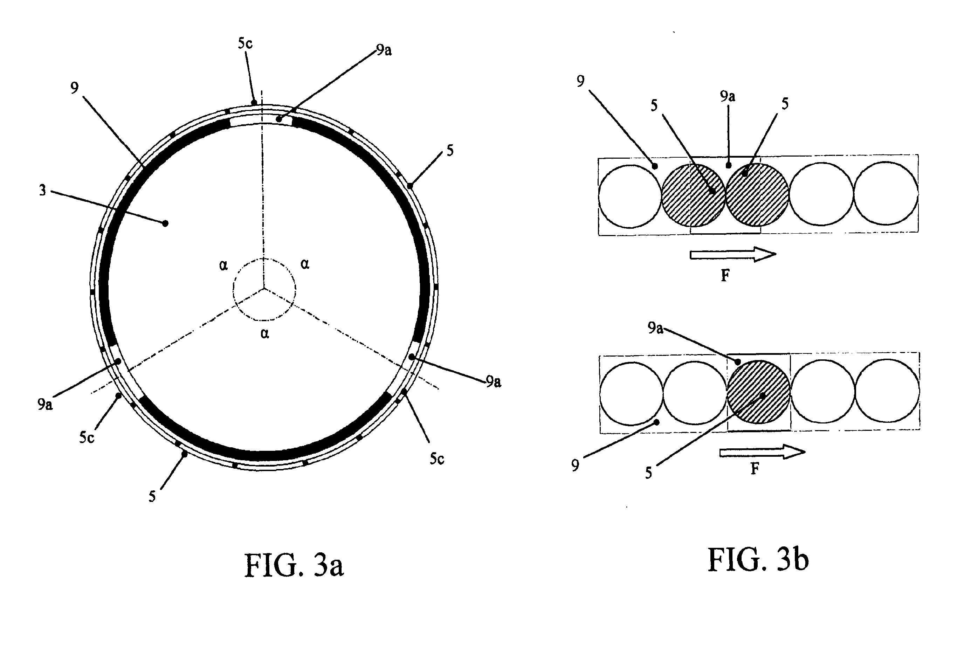

In such situation, referring to FIG. 3a, it is possible to note that in a preferred embodiment of the engine 1, the combustion chamber 3 is equipped with a plurality of openings 5 (for example equal to eighteen as shown in the embodiment of FIG. 3a) arranged on its whole circumferential perimeter and every triad of openings 5 (for example the triad of discharge openings designated by 5c) respectively arranged radially one from the other with an angle α which is substantially equal to 120° with respect to the rotation centre of the rotating valve 9, is connected through a suitable connector (not shown) to a same distribution duct 7.

In this way, during every fuel ignition step in the combustion chamber 3, it is guaranteed that the pressure impulse generated by fuel explosion is always mainly distributed along three directions which are mutually offset by angle α towards those openings left open by the rotating valve 9, thereby in a more homogeneous and balanced way inside the combustion chamber 3, increasing safety and reliability of the engine 1 according to the present invention.

With reference to FIG. 3b, it is also possible to provide for the arrangement of discharge openings 5 and the sizing of openings 9a of the rotating valve 9 in such a way that, during the fuel ignition step inside the combustion chamber 3, the rotation of the rotating valve 9 itself (shown in FIG. 3b by arrow F) leaves an open area of discharge openings (hatched area in FIG. 3b) which is always substantially equal, guaranteeing a pressure impulse transmission to the fluid contained in the distribution ducts which is advantageously constant and regular.

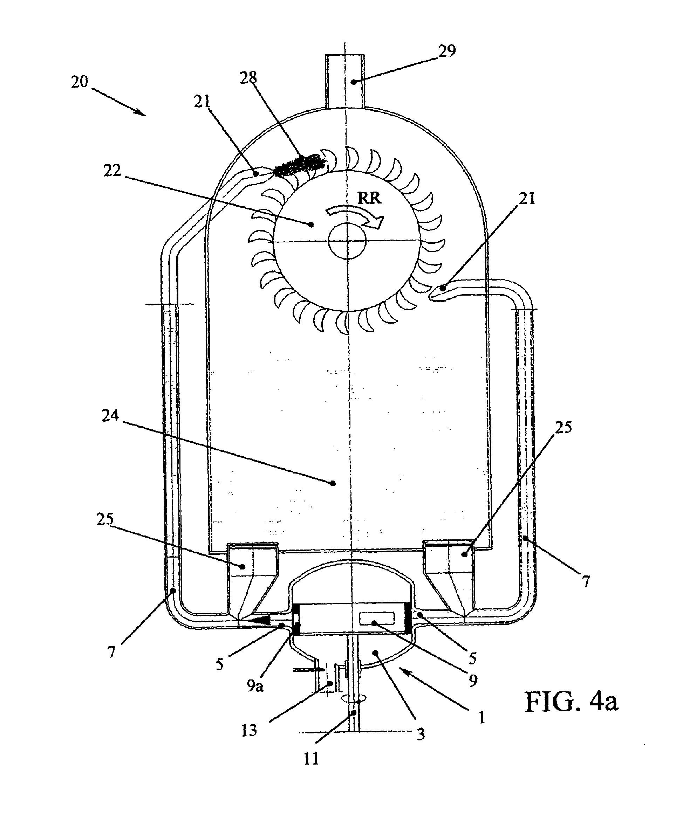

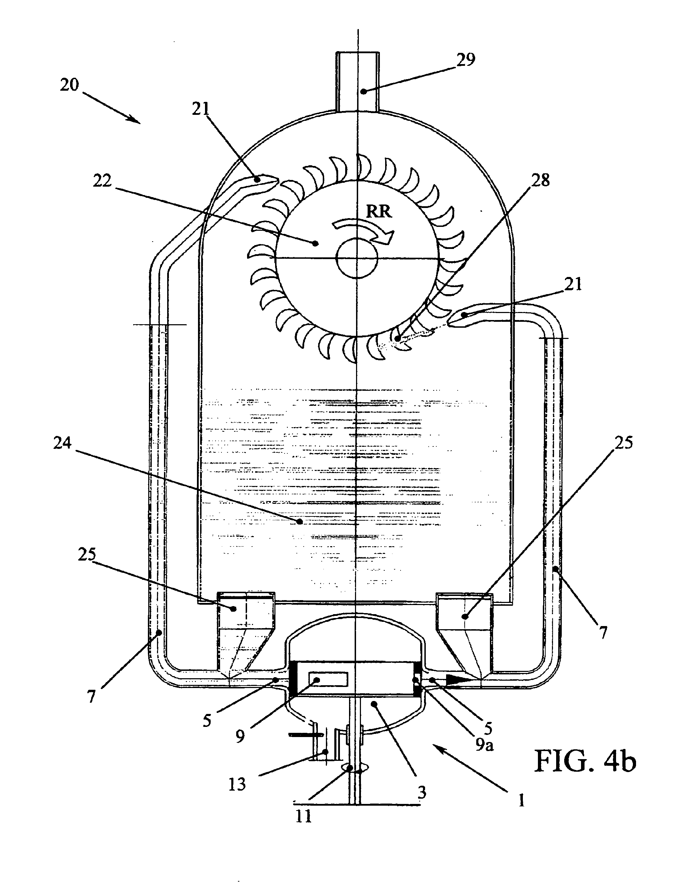

With reference now to FIG. 4a and 4b, it is possible to note a preferred embodiment of a system 20 for generating electric current comprising the liquid-piston engine 1 according to the present invention: in such embodiment, the engine 1 is shown as an example as the one described with reference to Figures 1 to 2g, but it is wholly obvious that such engine can be realised according to any one of the features according to the present invention, for example according to what is described with reference to FIG. 3a and 3b.

The system 20 for generating electric current then comprises at least one liquid-piston engine 1 whose distribution ducts 7, each one preferably equipped with a delivery nozzle 21 of the fluid container therein, serve at least one Pelton turbine 22: upon every fuel ignition cycle inside the engine 1, the rotation of the rotating valve 9 therein allows the pressure impulse generated inside the combustion chamber 3 to be cyclically and alternatively transmitted to the various distribution ducts 7 which serve the Pelton turbine 20, so that there always is a fluid jet 28 acting on the Pelton turbine 22 itself, which, in such a way, is advantageously characterised by a regular and continuous operation.

The system 20 further comprises at least one collection tank 24 of the fluid delivered to the Pelton turbine 22 from distribution ducts 7, communicating with each distribution duct 7 by interposing at least one check valve 25: each check valve 25 is suitably provided so that it can be closed when the related distribution duct 7 is pressurised due to the pressure impulse transmitted by the combustion in the combustion chamber 3 to the fluid inside it, while it is otherwise open to allow the fluid contained in the collection tank 24 to restore its optimum fluid level inside its distribution duct 7.

With reference to FIG. 4a, it is possible to note an operating step of the system 20 according to the present invention; in such situation, the engine 1 transmits the pressure impulse to the fluid contained inside the distribution duct 7 shown on the left side of the Figure, whose check valve 25 is closed while the check valve 25 of the distribution duct 7 shown on the right side of the Figure is open to restore the fluid level inside it: the fluid is thereby pushed to go out as a jet 28 from the related delivery nozzle 21 and to operate on the blades of the Pelton turbine 22 which is then taken to rotate according to the direction shown by arrow RR for the consequent generation of electric energy.

With reference now to FIG. 4b, it is possible to note another operating step of the system 20 according to the present invention; in such situation, the cyclic operation of the engine 1 as previously described enables to transmit the pressure impulse to the fluid contained inside the distribution duct 7 shown on the right side of the Figure, whose check valve 25 is closed while now the check valve 25 of the distribution duct 7 shown on the left side of the Figure is open in order to restore the fluid level inside it: the fluid is thereby pushed to go out as a jet 28 from the related delivery nozzle 21 and to act onto the blades of the Pelton turbine 22 which is then kept rotating always according to the direction shown by arrow RR. Obviously, the system 20 can further be equipped with at least one vent intake 29 for possible exhaust or unburnt gases remained trapped into the fluid delivered to the Pelton turbine 22.

The above described operating steps can obviously occur in a cyclic and continuous sequence to guarantee the regular operation of the Pelton turbine. Moreover, the operation of the system 20 according to the present invention has been described as an example referring to the use of only two delivery ducts 7, but it is clear that a system 20 using a different number of distribution ducts 7, even a plurality of liquid-piston engines 1, can be realised according to the present invention.

## Claims

1. Liquid-piston engine (1), with a combustion chamber (3) equipped on its external perimeter with at least two discharge openings (5, 5a, 5b, 5c) respectively communicating with at least one distribution duct (7, 7a, 7b) containing a fluid operating as liquid piston, **characterized in that** said combustion chamber (3) containing an internal rotating valve (9) adapted to allow a periodic and alternate communication during a rotation cycle thereof between at least one of said discharge openings (5, 5a, 5b, 5c) of said combustion chamber (3) and an interior of said combustion chamber (3).

2. Engine (1) according to claim 1, **characterised in that** it comprises a supply system of a fuel substance or mixture, inside said combustion chamber (3), said system comprising at least one supply duct (13) adapted to input said fuel inside said combustion chamber (3) and an ignition system for said fuel.

3. Engine (1) according to claim 1, **characterised in that** said rotating valve (9) is a circular crown radially equipped with at least three openings (9a) arranged at 120° one to the other.

4. Engine (1) according to claim 1, **characterised in that** said discharge openings (5, 5a, 5b) are eighteen.

5. Engine (1) according to claim 1 or 4, **characterised in that** every triad of said discharge openings (5, 5c) respectively arranged radially one to the other with an angle α = 120° with respect to the rotation centre of said rotating valve (9) is connected through a collector to the same one of said distribution ducts (7).

6. Engine (1) according to claim 1, **characterised in that** said combustion chamber (3) has a circular plan.

7. Engine (1) according to claim 1, **characterised in that** said fluid is water.

8. Engine (1) according to claim 1, **characterised in that** said rotating valve (9) is driver to rotate by at least one rotation shaft (11) driven by at least one actuating engine.

9. Engine (1) according to claim 2, **characterised in that** said fuel is a fossil gas generated by a biomass.

10. System (20) for generating electric current, **characterised in that** it comprises at least one engine (1) according to any one of the previous claims, adapted to serve with said fluid through said distribution ducts (7, 7a, 7b) at least one Pelton turbine (22).

11. System (20) according to claim 10, **characterised in that** it comprises at least one collection tank (24) of said fluid delivered to said Pelton turbine (22) by said distribution ducts (7, 7a, 7b), said collecting tank (24) communicating with said distribution ducts (7) by interposing at least one check valve (25).

12. System (20) according to claim 11, **characterised in that** each one of said check valves (25) is closed when the related distribution duct (7) is pressurises due to a pressure impulse transmitted by a combustion of said fuel in said combustion chamber (3) to said fluid inside it, while it is otherwise open to allow said fluid contained in said collecting tank (24) to restore an optimum fluid level inside one of its related distribution ducts (7).

## Patentansprüche

1. Flüssigkeitskolbenmotor (1) mit einer Verbrennungskammer (3), der an seinem Außenrand mit mindestens zwei Auslassöffnungen (5, 5a, 5b, 5c) ausgestattet ist, die miteinander durch mindestens eine Verteilleitung (7, 7a, 7b) verbunden sind, welche eine Flüssigkeit enthält, die als Flüssigkeitskolben funktioniert, und **dadurch gekennzeichnet ist, dass** die genannte Verbrennungskammer (3) ein internes Drehventil (9) enthält, das dazu dient, zwischen mindestens einer der genannten Auslassöffnungen (5, 5a, 5b, 5c) der genannten Verbrennungskammer (3) und dem Inneren dieser genannten Verbrennungskammer (3) während eines seiner Drehzyklen eine periodische und abwechselnde Verbindung zu ermöglichen.

2. Motor (1) gemäß Patentanspruch 1, der **dadurch gekennzeichnet ist, dass** er ein Versorgungssystem für eine Brennstoffsubstanz oder -mischung enthält, im Inneren der genannten Verbrennungskammer (3) enthält das genannte System mindestens eine Versorgungsleitung (13), die dazu dient, den genannten Brennstoff in die genannte Verbrennungskammer (3) einzuführen, sowie ein Einspritzsystem des genannten Brennstoffs.

3. Motor (1) gemäß Patentanspruch 1, der **dadurch gekennzeichnet ist, dass** das genannte Drehventil (9) ein runder Kranz ist, der radial mit mindestens drei Öffnungen (9a) ausgestattet ist, die 120° zueinander angeordnet sind.

4. Motor (1) gemäß Patentanspruch 1, der **dadurch gekennzeichnet ist, dass** die genannten Auslassöffnungen (5, 5a, 5b) achtzehn sind.

5. Motor (1) gemäß Patentanspruch 1 oder 4, der **dadurch gekennzeichnet ist, dass** jeder Dreier der genannten Auslassöffnungen (5, 5c), die entsprechend radial mit dem Winkel α = 120° zueinander hinsichtlich eines Drehzentrums des genannten Drehventils (9) angeordnet sind, durch einen Auspuffkrümmer mit derselben genannten Verteilleitung (7) verbunden sind.

6. Motor (1) gemäß Patentanspruch 1, der **dadurch gekennzeichnet ist, dass** die genannte Verbrennungskammer (3) einen runden Grundriss hat.

7. Motor (1) gemäß Patentanspruch 1, der **dadurch gekennzeichnet ist, dass** die genannte Flüssigkeit Wasser ist.

8. Motor (1) gemäß Patentanspruch 1, der **dadurch gekennzeichnet ist, dass** das genannte Drehventil (9) durch mindestens eine Drehwelle (11), die durch mindestens einen Antriebsmotor gesteuert wird, gedreht wird.

9. Motor (1) gemäß Patentanspruch 2, der **dadurch gekennzeichnet ist, dass** der genannte Brennstoff ein Fossilgas ist, das durch eine Biomasse erzeugt wird.

10. Stromgeneratoranlage (20), die **dadurch gekennzeichnet ist, dass** sie mindestens einen Motor (1) gemäß einem der vorhergehenden Patentansprüche enthält, der dazu dient, durch die genannten Verteilleitungen (7, 7a, 7b) mindestens eine Peltonturbine (22) mit der genannten Flüssigkeit zu versorgen.

11. Anlage (20) gemäß Patentanspruch 10, die **dadurch gekennzeichnet ist, dass** sie mindestens eine Sammelwanne (24) für die genannte Flüssigkeit enthält, die durch die genannten Verteilleitungen (7, 7a, 7b) an die genannte Peltonturbine (22) abgegeben wird, die genannte Sammelwanne (24) ist mit jeder der genannten Verteilleitungen (7) durch Dazwischenlegen von mindestens einem Rückschlagventil (25) verbunden.

12. Anlage (20) gemäß Patentanspruch 11, die **dadurch gekennzeichnet ist, dass** jedes der genannten Rückschlagventile (25) geschlossen ist, wenn die entsprechende Verteilleitung (7) aufgrund eines Druckimpulses, der durch eine Verbrennung des genannten Brennstoffs in der genannten Verbrennungskammer (3) an die genannte Flüssigkeit in ihrem Inneren übertragen wird, unter Druck steht, während sie ansonsten geöffnet ist, um es der genannten Flüssigkeit, die in der genannten Sammelwanne (24) enthalten ist, zu ermöglichen, einen optimalen Stand dieser Flüssigkeit in ihrer entsprechenden Verteilleitung (7) wiederherzustellen.

## Revendications

1. Moteur (1) à piston liquide avec une chambre de combustion (3) pourvue, sur son périmètre extérieur, d'au moins deux orifices d'évacuation (5, 5a, 5b, 5c) communiquant respectivement avec au moins un conduit de distribution (7, 7a, 7b) contenant un fluide fonctionnant de par le piston liquide, **caractérisé en ce que** ladite chambre de combustion (3) contient un clapet pivotant (9) intérieur capable de permettre la communication périodique et alternée, pendant un de ses cycles de rotation, entre au moins un desdits orifices d'évacuation (5, 5a, 5b, 5c) de ladite chambre de combustion (3) et l'intérieur même de ladite chambre de combustion (3).

2. Moteur (1) selon la revendication 1, **caractérisé en ce qu'**il comprend un système d'alimentation d'une substance ou mélange combustible, à l'intérieur de ladite chambre de combustion (3), lequel système comprenant au moins un conduit d'alimentation (13) capable d'introduire ledit combustible à l'intérieur de ladite chambre de combustion (3) et un système d'ignition dudit combustible.

3. Moteur (1) selon la revendication 1, **caractérisé en ce que** ledit clapet pivotant (9) est une couronne circulaire pourvue d'au moins trois ouvertures radiales (9a) disposées à 120° l'une de l'autre.

4. Moteur (1) selon la revendication 1, **caractérisé en ce que** lesdits orifices d'évacuation (5, 5a, 5b) sont au nombre de dix-huit.

5. Moteur (1) selon la revendication 1 ou 4, **caractérisé en ce que** chaque terne radiale desdits orifices d'évacuation (5, 5c) disposés l'un de l'autre avec un angle α = 120° par rapport à un centre de rotation dudit clapet pivotant (9) est reliée à travers un collecteur à un même conduit de distribution (7).

6. Moteur (1) selon la revendication 1, **caractérisé en ce que** ladite chambre de combustion (3) possède un plan circulaire.

7. Moteur (1) selon la revendication 1, **caractérisé en ce que** ledit fluide est de l'eau.

8. Moteur (1) selon la revendication 1, **caractérisé en ce que** ledit clapet pivotant (9) est amené en rotation par au moins un arbre de rotation (11) entraîné par au moins un moteur d'entraînement.

9. Moteur (1) selon la revendication 2, **caractérisé en ce que** ledit combustible est un gaz fossile généré par une biomasse.

10. Installation (20) d'un générateur de courant électrique, **caractérisée en ce qu'**elle comprend au moins un moteur (1) selon une quelconques des revendications précédentes et capable de servir, avec ledit fluide desdits conduits de distribution (7, 7a, 7b), au moins une turbine Pelton (22).

11. Installation (20) selon la revendication 10, **caractérisée en ce qu'**elle comprend au moins une cuve pour recueillir (24) ledit fluide distribué à ladite turbine Pelton (22) par les conduits de distribution (7, 7a, 7b), ladite cuve de recueillement (24) étant communicante avec chacun desdits conduits de distribution (7) au moyen de l'interposition d'au moins un clapet de retenue (25).

12. Installation (20) selon la revendication 11, **caractérisée en ce que** chacun desdits clapets de retenue (25) est fermé lorsque le conduit de distribution correspondant (7) se trouve sous pression à cause d'une impulsion de pression transmise par une combustion dudit combustible dans ladite chambre de combustion (3) audit fluide présent l'intérieur de celle-ci, alors qu'elle est normalement ouverte pour permettre audit fluide contenu dans ladite cuve de recueillement (24) de rétablir un niveau optimal de ce fluide à l'intérieur du propre conduit de distribution correspondant (7).
